# EUROPÄISCHE PATENTANMELDUNG

(11) **EP 1 833 258 A2**
(43) Veröffentlichungstag der Anmeldung: **12.09.2007**
(21) Anmeldenummer: 07004777.4
(22) Anmeldetag: 08.03.2007
(51) Int. Cl.: H04N 7/26

(54) **Hybrides Bildkompressionsverfahren**

(30) Priorität: 08.03.2006 DE 102006010763
(71) Anmelder: Netviewer GmbH, 76133 Karlsruhe (DE)
(72) Erfinder: Neumann, Jürgen, 76149 Karlsruhe (DE)
(74) Vertreter: Rummler, Felix

(57) **Zusammenfassung**

Erfindungsgemäß ist ein Verfahren zur Kompression von Bilddaten geschaffen, umfassend: Aufteilen eines zu komprimierenden Bildes in eine Vielzahl von Bildteilen; Bestimmen, für jeden Bildteil, eines Kompressionsverfahrens aus einer Mehrzahl von Kompressionsverfahren, mittels vorbestimmter Parameter; und Komprimieren der Bilddaten jedes Bildteiles mittels des jeweils bestimmten Kompressionsverfahrens. Durch Aufteilen eines zu komprimierenden Bildes in eine Vielzahl von Bereichen bzw. Teilen kann jedem Bildteil ein geeignetes Kompressionsverfahren zugeordnet werden. Insbesondere umfasst die Mehrzahl von Kompressionsverfahren ein verlustloses und ein verlustbehaftetes Kompressionsverfahren. Für Bildteile, die vorwiegend aus Text bestehen, wird ein verlustloses Kompressionsverfahren gewählt. Für Bildteile, die überwiegend aus grafischen Darstellungen bestehen, wird ein verlustbehaftetes Kompressionsverfahren gewählt.

## Beschreibung

Die vorliegende Erfindung betrifft ein Verfahren zur Kompression von Bilddaten, insbesondere ein hybrides Bildkompressionsverfahren zur Kompression von gemischten Bildschirminhalten.

### Hintergrund der Erfindung

Bei der Übertragung von elektronisch gespeicherten Bildern, insbesondere von Bildschirminhalten ist es wünschenswert, vor der Übertragung eine Komprimierung der Bilddaten durchzuführen, um so die zu übertragende Datenmenge zu reduzieren. Dadurch werden die Datenlast des zur Bildübertragung verwendeten Netzwerkes und die Übertragungszeit verringert. Letzteres ist insbesondere bei langsamen Datenverbindungen wünschenswert.

Bei der Kompression der Bildinhalte sind üblicherweise drei Faktoren zu beachten:
1. Zeitaufwand/Rechenaufwand für die Kompression: wie viel Rechenaufwand muss betrieben werden, um ein Bild mit einem Kompressionsverfahren zu komprimieren?
2. Kompressionsfaktor: wie groß ist der Quotient aus "Originaldatenmenge" und "komprimierter Datenmenge"?
3. Ist das Kompressionsverfahren verlustbehaftet? D.h. gehen durch die Kompression Bilddetailinformationen verloren?

Bekannt sind verlustbehaftete Kompressionsverfahren (z.B. JPG, Wavelet-Kompression), die sich insbesondere für die Übertragung von Digitalfotos eignen. Hierbei werden sehr gute Kompressionsraten erzielt, wobei die bei der Kompression/Dekompression entstehenden Artefakte für das menschliche Auge nur schlecht wahrnehmbar sind.

Für die Übertragung von Textabbildungen sind verlustbehaftete Kompressionsverfahren jedoch weniger geeignet: zum Einen sind die Kompressionsraten geringer (da es mehr "harte" Helligkeitswechsel zwischen benachbarten Pixeln gibt); zum Anderen sind die entstehenden Übertragungsartefakte für das menschliche Auge deutlich wahrnehmbar.

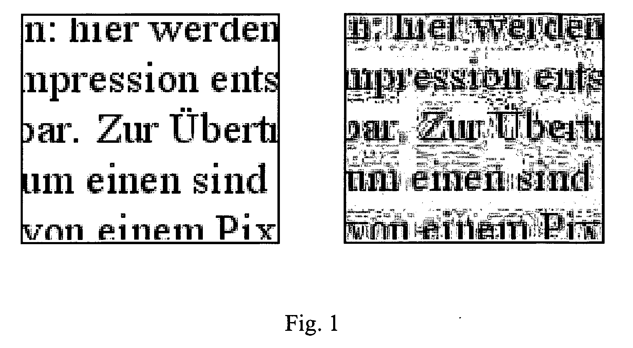

Figur 1 zeigt beispielhaft links eine Textabbildung im Original, und rechts nach einer Komprimierung im JPG-Format. Deutlich zu sehen sind die Schatten bzw. Schlieren an den Kanten der einzelnen Buchstaben.

Für Textabbildungen besser geeignet sind deshalb sogenannte verlustfreie Verfahren (z.B. GIF, PNG), die dabei eine hohe Kompressionsrate erreichen. Bei der Kompression von Digitalfotos erreichen diese jedoch nur sehr mangelhafte Kompressionsraten.

Bei vielen Anwendungen müssen Bildschirminhalte komprimiert und übertragen werden, die aus einer Mischung aus (einfarbigen) Texten und (mehrfarbigen) Bildern (Fotografien) bestehen. Eine Vorab-Festlegung auf ein verlustfreies oder ein verlustbehaftetes Kompressionsverfahren führt deshalb dazu, dass einzelne Bildbereiche mit einem "unpassenden" Verfahren komprimiert werden.

Basierend auf dieser Erkenntnis ist es eine Aufgabe der vorliegenden Erfindung, die Nachteile des Standes der Technik zumindest abzumindern.

### Zusammenfassung der Erfindung

Erfindungsgemäß ist ein Verfahren zur Kompression von Bilddaten geschaffen, umfassend: Aufteilen eines zu komprimierenden Bildes in eine Vielzahl von Bildteilen; Bestimmen, für jeden Bildteil, eines Kompressionsverfahrens aus einer Mehrzahl von Kompressionsverfahren, mittels vorbestimmter Parameter; und Komprimieren der Bilddaten jedes Bildteiles mittels des jeweils bestimmten Kompressionsverfahrens.

Durch Aufteilen eines zu komprimierenden Bildes in eine Vielzahl von Bereichen bzw. Teilen kann jedem Bildteil ein geeignetes Kompressionsverfahren zugeordnet werden. Insbesondere umfasst die Mehrzahl von Kompressionsverfahren (mindestens) ein verlustloses und (mindestens) ein verlustbehaftetes Kompressionsverfahren. Für Bildteile, die vorwiegend aus Text bestehen, kann ein verlustloses Kompressionsverfahren gewählt werden. Entsprechend kann für Bildteile, die überwiegend aus grafischen Darstellungen bestehen, ein verlustbehaftetes Kompressionsverfahren gewählt werden. Insgesamt werden somit die Kompressionsrate und die Qualität des Gesamtbildes nach dessen Komprimierung und Dekomprimierung verbessert.

Somit überwindet die Erfindung den Hauptnachteil des Standes der Technik, wonach zu übertragende Bilder in ihrer Gesamtheit (d.h. als Einheit) in einem vorbestimmten Kompressionsverfahren komprimiert wird. Gemäß dem erfindungsgemäßen Verfahren hingegen werden zusammenhängende Bilder in einzelne Bereiche zerlegt und die Bereiche einzeln dahingehend analysiert, ob diese (jeweils einzeln) verlustfrei oder verlustbehaftet komprimiert übertragen werden sollen. Im Anschluss daran werden die einzelnen Bereiche sequentiell mittels dem jeweils passenden Verfahren komprimiert. Dies ist insbesondere bei "gemischten" Bildinhalten (z.B. Screenshot von einem Internetbrowser mit Text und Fotoanteilen; Desktopinhalte) von Vorteil. Zu beachten ist also, dass das erfindungsgemäße Verfahren auf Bilder anwendbar ist, die innerhalb einzelner Bilddateien gespeichert sind. D.h. es werden nicht separate Bilddateien unterschiedlich komprimiert, sondern innerhalb zu komprimierender Bilddateien werden unterschiedliche Kompressionsverfahren angewendet.

Nach einer Ausgestaltung der Erfindung wird zwischen einem ersten und einem zweiten Bildtyp unterschieden. Jeder Bildteil wird entweder dem ersten oder dem zweiten Bildtyp zugeordnet. Anschließend werden die Bilddaten aller Bildteile des ersten Bildtyps mittels eines verlustlosen Kompressionsverfahrens komprimiert, und die Bilddaten aller Bildteile des zweiten Bildtyps mittels eines verlustbehafteten Kompressionsverfahrens. Insbesondere werden Bildteile, die vorwiegend Text enthalten, dem ersten Bildtyp zugeordnet. Bildteile, die vorwiegend aus grafischen Darstellungen bestehen, werden dem zweiten Bildtyp zugeordnet.

Die Unterscheidung der Bildtypen kann beispielsweise anhand der Anzahl der Farben erfolgen. Dazu wird in allen Bildteilen die Anzahl der Farben bestimmt. Bildteile, die weniger als eine vorbestimmten erste Anzahl von Farben enthalten (z.B. Text), werden dem ersten Bildtyp zugeordnet. Bildteile, die mehr als eine vorbestimmten zweite Anzahl von Farben enthalten (z.B. farbige grafische Darstellungen), werden dem zweiten Bildtyp zugeordnet. Anschließend werden die Bilddaten aller Bildteile des ersten Bildtyps mittels des verlustlosen Kompressionsverfahrens komprimiert, und die Bilddaten aller Bildteile des zweiten Bildtyps mittels des verlustbehafteten Kompressionsverfahrens.

Vorzugsweise ist die erste Anzahl von Farben geringer ist als die zweite Anzahl von Farben. Dadurch kann eine "Hysterese" geschaffen werden, was den Zusammenhang zwischen dem Bildteilinhalt und der Auswahl des Kompressionsverfahren angeht, d.h. ein "Hin- und Herschalten" zwischen unterschiedlichen Kompressionsverfahren bei ähnlichen Inhalten benachbarter Bildteile kann vermieden werden.

In einer vorteilhaften Ausgestaltung der Erfindung wird entsprechend jeder Bildteil, dessen Anzahl von Farben größer ist als die besagte erste Anzahl von Farben und kleiner ist als die besagte zweite Anzahl von Farben mittels des für den zuletzt komprimierten Bildteil bestimmten Kompressionsverfahrens komprimiert.

Vorzugsweise wird das geeignete Kompressionsverfahren für jeden Bildteil vor dem Komprimieren der Bildteile bestimmt. Dadurch können Bildteile, für die das gleiche Kompressionsverfahren bestimmt worden ist, gemeinsam komprimiert werden, wodurch der Verarbeitungsaufwand vermindert werden kann.

Insbesondere können aneinander angrenzende Bildteilen, für die das selbe Kompressionsverfahren bestimmt worden ist, gemeinsam komprimiert werden. Solche Bildteile können vor der Komprimierung quasi wieder zusammengefügt werden, um den Komprimierungsaufwand zu verringern. Dies ist besonders vorteilhaft bei aneinander angrenzenden Bildteilen, für die ein verlustfreies Kompressionsverfahren bestimmt worden ist, da dadurch der Kompressionsfaktor erhöht wird.

Erfindungsgemäß ist außerdem eine Datenverarbeitungsvorrichtung geschaffen, die ausgebildet ist zur Durchführung des oben beschriebenen Verfahrens.

Erfindungsgemäß ist weiterhin ein Programm geschaffen, das maschinenlesbare Instruktionen zur Durchführung des oben beschriebenen Verfahrens auf einer Datenverarbeitungsvorrichtung enthält.

Erfindungsgemäß ist darüber hinaus ein Speichermedium geschaffen mit einem darauf gespeicherten maschinenlesbaren Programm gemäß dem vorhergehenden Absatz.

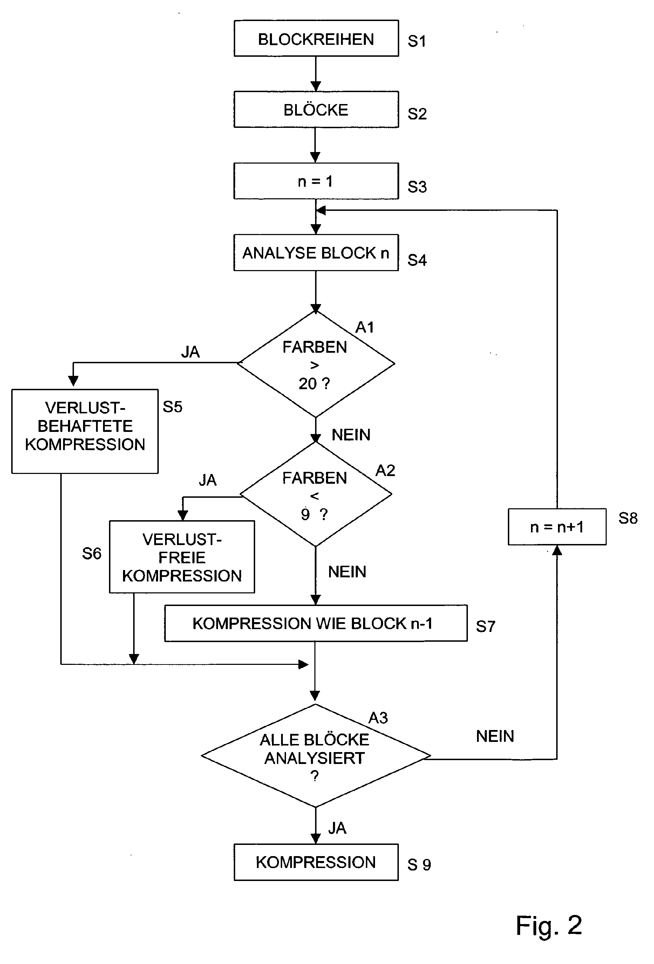

Die Erfindung wird nun anhand eines beispielhaften Ausführungsbeispieles mit Bezug auf Figur 2 beschrieben.

In Schritt S 1 wird ein zu übertragendes Bild in seiner Gesamtheit in Blockreihen zerlegt. Die Blockreihen bestehen aus jeweils aus acht Zeilen. In Schritt S2 wird jede Blockreihe in Abschnitte zu je 8 Pixeln zerlegt. Somit wird das gesamte Bild in Bildblöcke zu je 8 mal 8 Pixeln aufgeteilt.

Anschließend wird für jeden Bildblock die Anzahl unterschiedlicher Farben ermittelt (Schritt S4, mit Iteration durch Schritt S3, Abfrage A3 und Schritt S8). Ist die Anzahl der Farben größer ist als 20 (d.h. einem vorbestimmten ersten Grenzwert), so wird dieser Block für eine verlustbehaftete Kompression vorgesehen (Abfrage A1 und Schritt S5). Ist die Anzahl der Farben kleiner als 9 (d.h. einem vorbestimmten zweiten Grenzwert), so wird dieser Block für eine verlustlose Kompression vorgesehen (Abfrage A2 und Schritt S6). Liegt die Anzahl der Farben zwischen 9 (dem zweiten Grenzwert) und 20 (dem ersten Grenzwert), so wird dieser Block für die gleiche Art von Kompression vorgesehen, wie der zuletzt analysierte Block (Schritt S7).

Anschließend wird jeder Bildblock gemäß dem zuvor zugeordneten Verfahren komprimiert (Schritt S9).

Durch die vollständige Trennung der Analyse und der Kompression ist es möglich, die verlustfreie Kompression über eine Reihe von N angrenzenden Blöcken auszudehnen, für die eine verlustfreie Kompression vorgehen ist.. In diesem Fall werden nicht N Blöcke mit 8 mal 8 Pixeln komprimiert, sondern nur ein Block mit (N*8) mal 8 Pixeln. Dies wirkt sich bei verlustfreien Kompressionsverfahren positiv auf den Kompressionsfaktor aus.

Bei der verlustbehafteten Kompression werden die Blöcke (8 mal 8 Pixel) jeweils einzeln komprimiert. Dies entspricht beispielsweise dem Vorgehen beim bekannten JPG-Verfahren.

## Patentansprüche

1. Verfahren zur Kompression von Bilddaten, umfassend:
Aufteilen eines zu komprimierenden Bildes in eine Vielzahl von Bildteilen;
Bestimmen eines ersten Bildtyps als Bildtyp mit weniger als einer vorbestimmten ersten Anzahl von Farben;
Bestimmen eines zweiten Bildtyps als Bildtyp mit mehr als einer vorbestimmten zweiten Anzahl von Farben;
Bestimmen der Anzahl von Farben innerhalb jedes Bildteiles;
Zuordnen jedes Bildteiles zum ersten oder zweiten Bildtyp in Abhängigkeit von der Anzahl von Farben innerhalb des jeweiligen Bildteiles;
Komprimieren der Bilddaten aller Bildteile des ersten Bildtyps mittels eines ersten Kompressionsverfahrens; und
Komprimieren der Bilddaten aller Bildteile des zweiten Bildtyps mittels eines zweiten Kompressionsverfahrens.

2. Verfahren nach Anspruch 1, wobei die ersten und zweiten Kompressionsverfahren durch ein verlustloses bzw. ein verlustbehaftetes Kompressionsverfahren gebildet werden.

3. Verfahren nach Anspruch 1 oder 2, wobei der erste Anzahl von Farben geringer ist als die zweite Anzahl von Farben.

4. Verfahren nach Anspruch 3, umfassend:
Komprimieren eines Bildteiles mittels des für den zuletzt komprimierten Bildteil bestimmten Kompressionsverfahrens, wenn die Anzahl der Farben dieses Bildteiles größer ist als die erste und kleiner als die zweite Anzahl von Farben.

5. Verfahren nach einem der vorhergehenden Ansprüche, umfassend das Bestimmen eines Kompressionsverfahrens für jeden Bildteil vor dem Komprimieren aller Bildteile.

6. Verfahren nach Anspruch 5, umfassend das gemeinsame Komprimieren von aneinander angrenzenden Bildteilen, für die das selbe Kompressionsverfahren bestimmt worden ist.

7. Verfahren nach Anspruch 2, umfassend das gemeinsame Komprimieren von aneinander angrenzenden Bildteilen, für die ein verlustfreies Kompressionsverfahren bestimmt worden ist.

8. Verfahren nach einem der vorhergehenden Ansprüche, wobei die Bilddaten des zu komprimierenden Bildes innerhalb einer Bilddatei enthalten sind.

9. Verfahren nach einem der vorhergehenden Ansprüche, wobei das zu komprimierende Bild durch einen Bildschirminhalt (Screenshot) gebildet wird.

10. Datenverarbeitungsvorrichtung, die ausgebildet ist zur Durchführung des Verfahrens nach einem der vorhergehenden Ansprüche.

11. Programm umfassend maschinenlesbare Instruktionen zur Durchführung des Verfahrens nach einem der vorhergehenden Ansprüche auf einer Datenverarbeitungsvorrichtung.

12. Speichermedium mit einem darauf gespeicherten maschinenlesbaren Programm nach Anspruch 11.
